# EUROPEAN PATENT SPECIFICATION

(11) **EP 4 371 747 B1**
(45) Date of publication and mention of the grant of the patent: **04.03.2026**
(21) Application number: 23201666.7
(22) Date of filing: 04.10.2023
(51) Int. Cl.: B29C 70/54, B29C 33/42

(54) **METHOD FOR FORMING A COMPOSITE PRODUCT**
VERFAHREN ZUR BILDUNG EINES VERBUNDPRODUKTS
PROCÉDÉ DE FORMATION D'UN PRODUIT COMPOSITE

(30) Priority: 17.11.2022 US 202263384154 P; 07.09.2023 US 202318462689
(43) Date of publication of application: 22.05.2024
(73) Proprietor: The Boeing Company, Arlington, VA 22202 (US)
(72) Inventor: Cowan, Daniel James, Arlington, 22202 (US); Carpenter, Brian S., Arlington, 22202 (US); Peter, Markus G., Arlington, 22202 (US)
(74) Representative: Witte, Weller & Partner Patentanwälte mbB

(56) References cited:
- EP-A1- 0 807 504
- WO-A1-98/50180
- US-A1- 2004 217 497
- US-A1- 2016 167 317

## Description

### BACKGROUND INFORMATION

### 1. Field:

The present disclosure relates generally to composite manufacturing and more specifically to reducing manufacturing time by reducing mold preparation time between curing cycles.

### 2. Background:

Aircraft are being designed and manufactured with greater and greater percentages of composite materials. Composite materials are used in aircraft to decrease the weight of the aircraft. This decreased weight improves performance features such as payload capacities and fuel efficiencies. Further, composite materials provide longer service life for various components in an aircraft.

Composite materials are strong, light-weight materials created by combining two or more constituent materials. For example, a composite material may include reinforcing fibers bound in polymer resin matrix. The fibers can take the form of a unidirectional tape, woven cloth or fabric, or a braid.

In manufacturing composite structures, layers of composite material are laid up on a tool and cured upon exposure to elevated temperature and pressure. The cured composite material can be removed from the curing tool prior to performing manufacturing operations such as machining operations on the cured composite material. Some cure tools enable machining operations on cured composite material on the cure tool. These cure tools have recesses for the trimming tools to enable machining operations without undesirably impacting the cure tool.

Preparing conventional cure tools for receiving the uncured composite material uses additional processing steps, additional manufacturing time, and potentially hazardous chemicals. Therefore, it would be desirable to have a method and apparatus that takes into account at least some of the issues discussed above, as well as other possible issues.

Document WO 98/50180 A1, according to its abstract, states a method of manufacturing a hybrid tool which serves both as a form on which constituent materials are applied for bonding or curing into a part in a desired configuration, and for holding the bonded or cured materials in the originally applied position during subsequent machining of a peripheral edge of the part by a CNC machine tool.

Document US 2004/0217497 A1, according to its abstract, states a method and apparatus for use in manufacturing a composite part includes molding a composite part on a lay-up tool, machining a sacrificial portion of a first surface for securing a first hardware device with the composite part while the part is on the lay-up tool and cutting the part forming a peripheral edge while the part is on the lay-up tool. The method can further include positioning the first hardware device in contact with a machined interface of the composite part and machining the part including drilling a plurality of positioning holes through the hardware device and the part while the part is on the lay-up tool. The machining can include machining the sacrificial portion creating a machined interface and positioning the hardware device on the machined interface.

Document EP 0 807 504 A1, according to its abstract, states a method of manufacturing a laid-up, bonded and, cured composite part, includes filling a groove on a facing surface of a tool with a foaming, self-skinning sacrificial material and covering the facing surface of the tool with a caul sheet. The tool is heated to cure the foaming material, filling the groove and forming a hard, smooth surface skin on the foam, flush with the facing surface of the tool. A series of plies are laid-up on the facing surface of the tool to form a tool-side skin, and other components (84) of the part are laid-up on top of the tool-side skin plies. An adhesive/resin matrix is coated on or pre-impregnated into the skin plies and the components for bonding/curing to create a rigid integral assembly of the akin and components. A vacuum bag is applied over the laid-up skin and components. The adhesive/resin matrix is bonded/cured to transform the skin and components into the rigid integral assembly. The tool is fixed in a known position on a CNC machine tool bed to Position the facing surface of the tool at a known position for edge routing of the rigid integral assembly by a machine tool. A cutter of the machine tool is guided on a predetermined path around the facing surface of the tool, with the cutter extending into the groove below the facing surface of the tool and cutting a peripheral edge around the rigid integral assembly. After edge routing, the rigid integral assembly is a finished part and is removed from the facing surface of the tool.

Document US 2016/0167317 A1, according to its abstract, states a cure tool assembly and method of manufacturing a composite part. The cure tool assembly may include a rigid cure tool having a cutter groove and a securing groove formed therein. The cutter groove may be spaced apart from and formed around the cutter groove. The securing groove may be slanted inward, away from a peripheral edge of the rigid cure tool. The cure tool assembly may also include a first sacrificial material located in the cutter groove and a second sacrificial material located in the securing groove. Composite material placed onto the outer surface of the rigid cure tool may bond with the second sacrificial material during cure, creating a desired hold-down force to keep the composite material in place. The resulting cured part may be cut along the cutter groove, thus cutting through the composite material and into the first sacrificial material.

### SUMMARY

An embodiment of the present disclosure provides a method of forming a composite product. A releasable gap filler is applied within a recess of a mold. After the releasable gap filler is cured, no additional release layers are added over releasable gap filler. An uncured composite material is applied directly over the releasable gap filler and onto the mold. The uncured composite material is cured to form a cured composite material on the mold. The cured composite material is removed from the mold and the releasable gap filler.

Another embodiment of the present disclosure provides a method of forming a composite product. An uncured composite material is placed over and in direct contact with a releasable gap filler within a recess in a mold. After the releasable gap filler is cured, no additional release layers are added over releasable gap filler. The composite material is cured while in direct contact with the releasable gap filler. The cured composite material is removed from the mold, leaving the releasable gap filler within the recess.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure** 1 is an illustration of an aircraft in accordance with an illustrative embodiment;
**Figure** 2 is an illustration of a block diagram of a manufacturing environment in accordance with an illustrative embodiment;
**Figure** 3 is an illustration of an isometric view of a mold having recesses in accordance with an illustrative embodiment;
**Figure** 4 is an illustration of an isometric view of a mold having releasable gap filler in the recesses in accordance with an illustrative embodiment;
**Figure** 5 is an illustration of an isometric view of a composite material over the mold in accordance with an illustrative embodiment;
**Figure** 6 is an illustration of an isometric view of a trimmed and drilled composite structure over the mold in accordance with an illustrative embodiment;
**Figure** 7 is an illustration of an isometric view of a mold having releasable gap filler remaining in the recesses after composite material is removed in accordance with an illustrative embodiment;
**Figure 8** is a flowchart of a method of forming a composite product in accordance with an illustrative embodiment;
**Figure 9** is a flowchart of a method of forming a composite product in accordance with an illustrative embodiment;
**Figure 10** is a flowchart of a method of forming a composite product in accordance with an illustrative embodiment;
**Figure 11** is an illustration of an aircraft manufacturing and service method in a form of a block diagram in accordance with an illustrative embodiment; and
**Figure 12** is an illustration of an aircraft in a form of a block diagram in which an illustrative embodiment may be implemented.

### DETAILED DESCRIPTION

The illustrative examples recognize and take into account one or more different considerations. For example, the illustrative examples recognize and take into account that mandrel segments, utilized to fabricate CFRP sections of an airplane, require groove filler to be applied into large trim grooves and hole machining locations that are required for the trim operations. The illustrative examples recognize and take into account that the current materials that are on the market for these applications are not releasable from the cured composite such as BMS8-276 prepreg carbon fiber reinforced polymer (CFRP). The illustrative examples recognize and take into account that these currently used materials require an additional production processing step with an application of a release agent between the CFRP part and the groove filler. The illustrative examples recognize and take into account that this additional processing step adds considerable flow time per component/airplane build.

The illustrative examples recognize and take into account that currently, various release agents are utilized to provide the required releasability of the groove filler from the carbon fiber reinforced polymer (CFRP). The illustrative examples recognize and take into account that this additional processing step adds considerable flow time per airplane.

The illustrative examples recognize and take into account that it would be desirable to eliminate additional processing steps, reduce the use of hazardous chemicals, and save manufacturing time. The illustrative examples recognize and take into account that reducing mold preparation steps could potentially result in significant flow reduction.

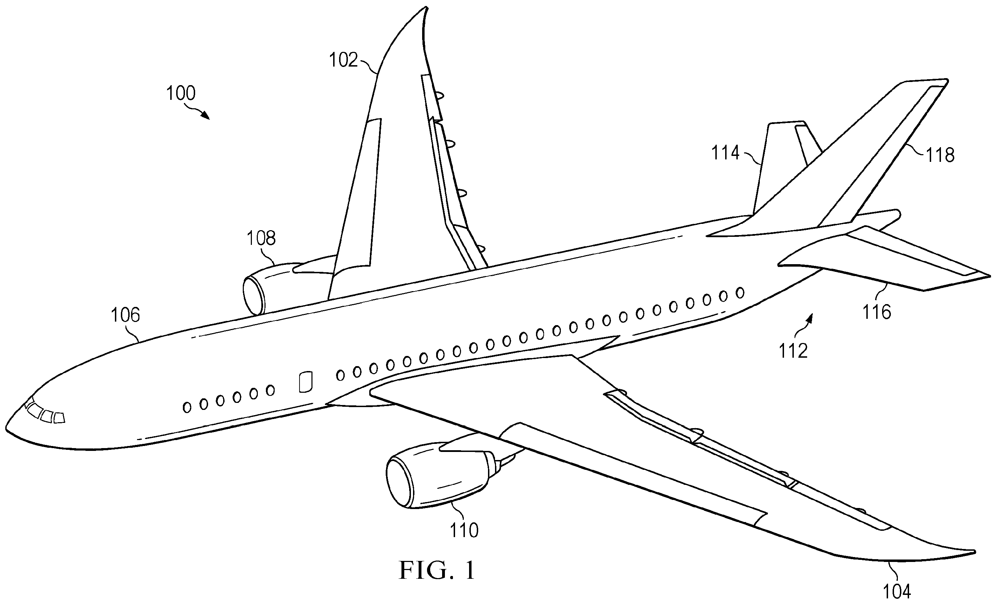

Turning now to **Figure 1****,** an illustration of an aircraft is depicted in accordance with an illustrative embodiment. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft having components formed using the methods of the illustrative example. Aircraft **100** is an example of an aircraft having composite components formed with a reduced mold downtime.

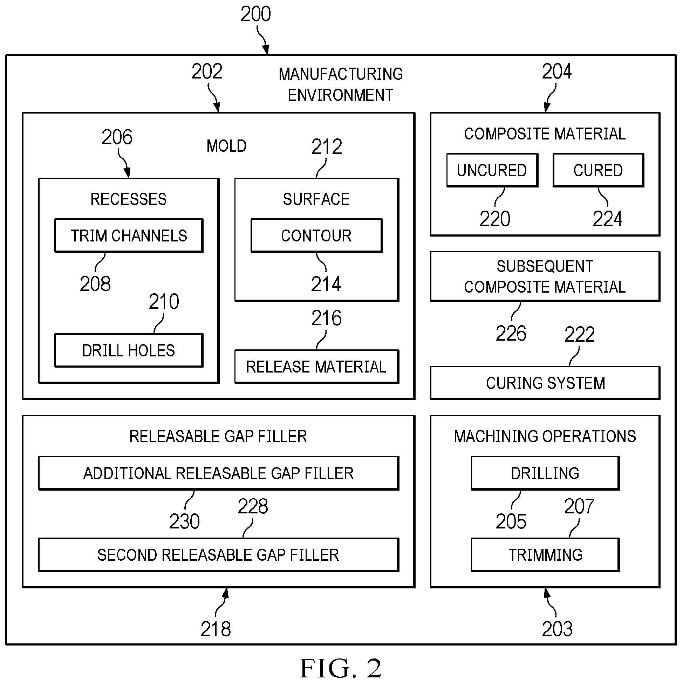

Turning now to **Figure 2****,** an illustration of a block diagram of a manufacturing environment is depicted in accordance with an illustrative embodiment. Components of aircraft **100** of **Figure 1** can be manufactured in manufacturing environment **200.**

Manufacturing environment **200** contains mold **202** configured to hold composite material **204** during curing and machining operations **203** such as drilling **205** or trimming **207.** Mold **202** has recesses **206** for accommodating machining operations **203** composite material **204.** Recesses **206** comprises at least one of trim channels **208** or drill holes **210.** Trim channels **208** are positioned in locations to accommodate trimming **207** of composite material **204.** Trim channels **208** prevent damage to mold **202** from cutting tools during trimming **207** operations on composite material **204.** Drill holes **210** are positioned in locations to accommodate drilling **205** of composite material **204.** Drill holes **210** prevent damage to mold **202** during drilling **205** operations on composite material **204.**

Recesses **206** are formed into surface **212** of mold **202.** Surface **212** has contour **214** designed to provide an inner mold line during curing of composite material **204.**

Release material **216** can optionally be applied to at least one of surface **212** or recesses **206** after a set quantity of uses. The release material **216** allows for release of cured **224** composite material **204** from mold **202.**

Releasable gap filler **218** is applied into recesses **206** prior to applying composite material **204** to mold **202.** Releasable gap filler **218** is configured to not adhere to composite material **204.** Releasable gap filler **218** is configured to endure curing of composite material **204.**

After being applied within recesses **206,** releasable gap filler **218** is shaped to match contour **214** of surface **212.** Releasable gap filler **218** is shaped so that releasable gap filler **218** is flush with mold **300.** After shaping, releasable gap filler **218** is set/cured. Releasable gap filler **218** is then scraped clean and inspected.

Composite material **204** is applied directly over releasable gap filler **218** as uncured **220** composite material **204.** Composite material **204** can be laid up onto mold **202** layer by layer or can be placed onto mold **202** in a pick and place operation.

Curing system **222** applies at least one of heat or pressure to cure composite material **204** to form cured **224** composite material **204** on mold **202.** Machining operations **203** are performed on cured **224** composite material **204** on mold **202.** Machining operations **203** include at least one of drilling **205** or trimming **207.** Drilling **205** can be performed over drill holes **210.** Trimming **207** can be performed over trim channels **208.**

After performing machining operations **203** on cured **224** composite material **204,** cured **224** composite material **204** is removed from mold **202.** Releasable gap filler **218** within recesses **206** remains within mold **202.** Releasable gap filler **218** does not adhere to cured composite material **204** when cured composite material **204** is removed from mold **202.**

In some illustrative examples, remaining releasable gap filler **218** within recesses **206** is removed from mold **202** prior to applying subsequent composite material **226.** Releasable gap filler **218** can be removed without sanding or other abrading methods. Releasable gap filler **218** can be removed by hand. Releasable gap filler **218** can be removed using a plastic scraper or other non-marring hand tools.

After removal of remaining releasable gap filler **218,** second releasable gap filler **228** is applied in recesses **206.** Second releasable gap filler **228** is then shaped, cured, scraped and inspected. Afterwards, subsequent composite material **226** is applied directly over second releasable gap filler **228.**

In some illustrative examples, remaining releasable gap filler **218** is left within recesses **206.**

In these illustrative examples, additional releasable gap filler **230** is applied over remaining releasable gap filler **218.** Additional releasable gap filler **230** is shaped to match contour **214** of surface **212.** Additional releasable gap filler **230** is shaped so that additional releasable gap filler **230** is flush with mold **300.** After shaping, additional releasable gap filler **230** is set/cured. In some illustrative examples, additional releasable gap filler **230** is then scraped clean and inspected. In some illustrative examples, applying additional releasable gap filler **230** can reduce manufacturing time by reducing or eliminating removal steps for releasable gap filler **218** and subsequent cleaning steps.

The illustration of manufacturing environment **200** in **Figure 2** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment. For example, in some illustrative examples, additional recesses or channels are present in mold **202** that are used for other purposes other than machining operations **203.** Recesses **206** are not meant to imply any limitations the types or quantity of recesses that can be present on mold **202.**

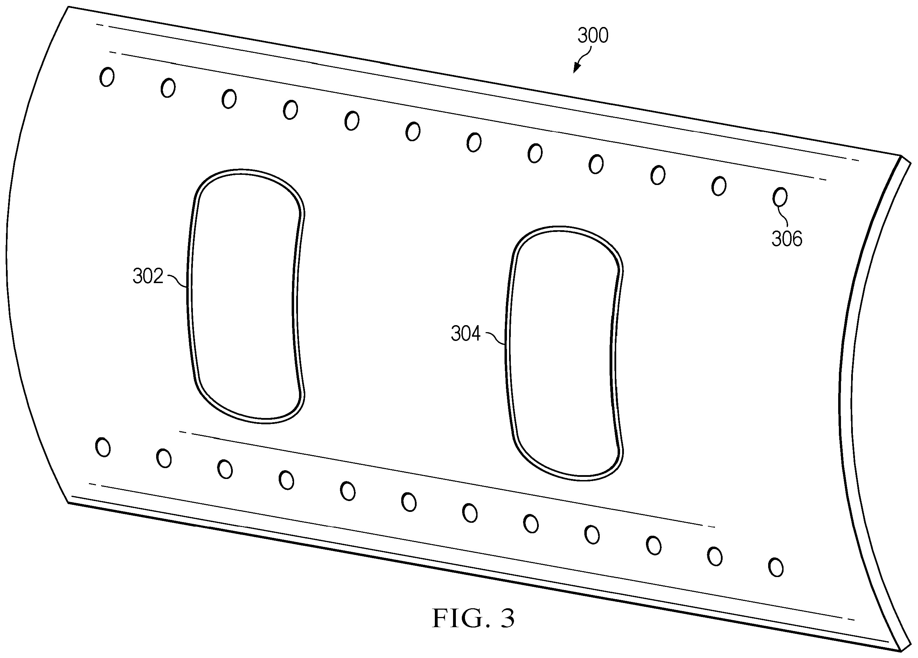

Turning now to **Figure 3****,** an illustration of an isometric view of a mold having recesses is depicted in accordance with an illustrative embodiment. Mold **300** is a physical implementation of mold **202** of **Figure 2****.** Mold **300** can be used to form portions of aircraft **100** of **Figure 1****,** such as portions of body **106,** wing **102,** or wing **104.**

Mold **300** has recesses **302** configured for manufacturing of a composite structure. In this illustrative example, recesses **302** comprise trim channels **304** and drill holes **306.** Recesses **302** are configured based on a specific design for a composite product. Trim channels **304** correspond to locations on a composite product that are trimmed. Drill holes **306** correspond to locations on a composite product that are drilled.

Mold **300** is formed of a material configured to support a composite material during curing. Mold **300** is formed of a material configured to withstand curing temperatures of the composite material.

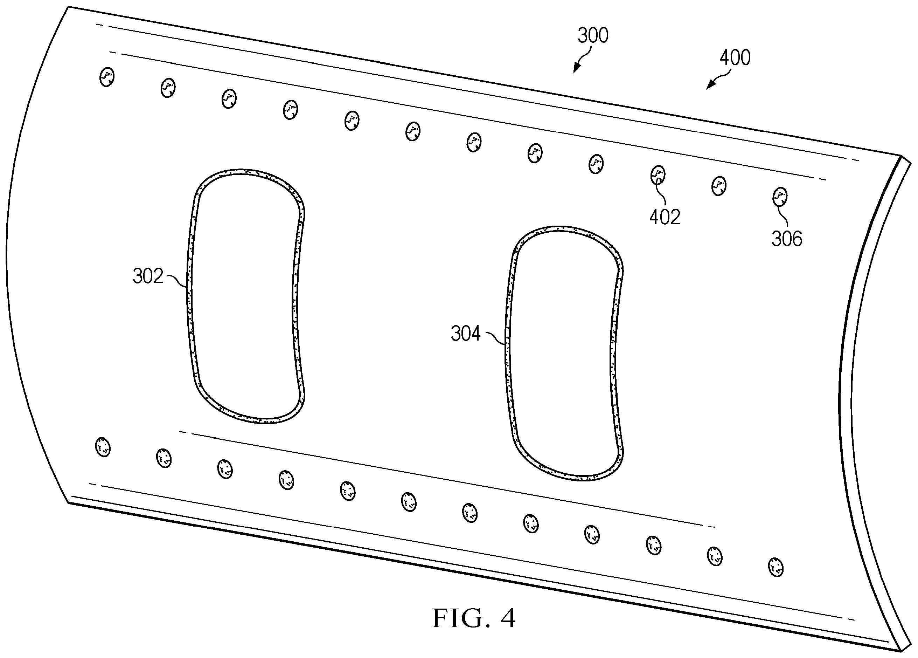

Turning now to **Figure 4****,** an illustration of an isometric view of a mold having releasable gap filler in the recesses is depicted in accordance with an illustrative embodiment. In view **400,** releasable gap filler **402** has been applied within recesses **302** of mold **300.** After application, releasable gap filler **402** is shaped so that releasable gap filler **402** is flush with mold **300.** After shaping, releasable gap filler **402** is set/cured. Releasable gap filler **402** is then scraped clean and inspected.

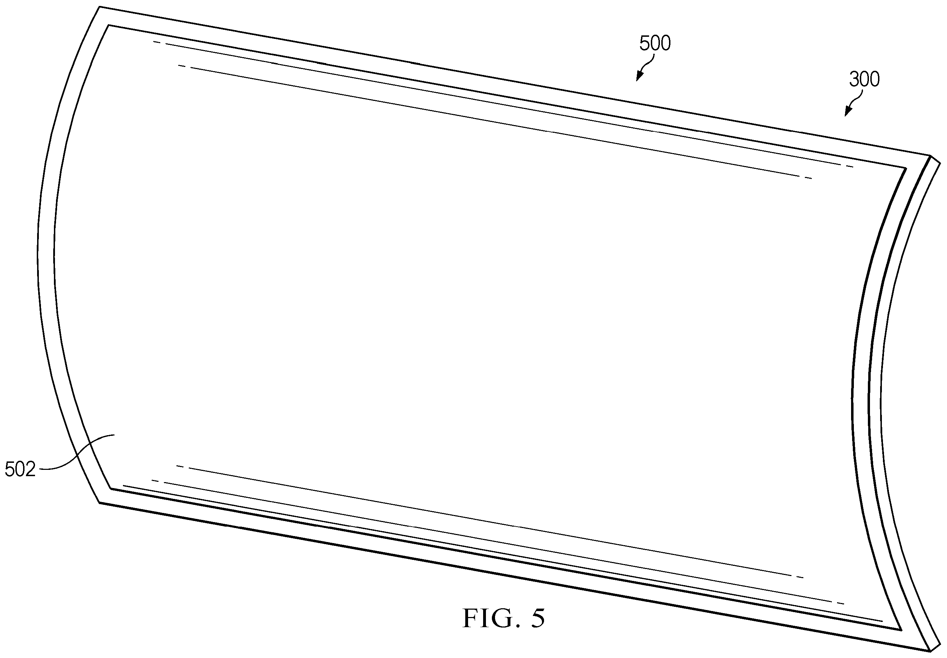

Turning now to **Figure 5****,** an illustration of an isometric view of a composite material over the mold is depicted in accordance with an illustrative embodiment. In view **500,** composite material **502** is positioned on mold **300.** Composite material **502** is positioned on mold **300** in an uncured state and cured while on mold **300.**

After releasable gap filler **402** is cured and inspected, no additional release layers are added over releasable gap filler **402.** Composite material **502** is placed onto mold **300** and in direct contact with releasable gap filler **402** in recesses **302.**

Composite material **502** is placed onto mold **300** in an uncured state using any desirable method. In some illustrative examples, composite material **502** is pick and placed onto mold **300.** In some illustrative examples, composite material **502** is laid up directly onto mold **300.**

After composite material **502** is placed onto mold **300,** composite material **502** is cured while on mold **300** to form a cured composite material. Due to the material properties of releasable gap filler **402,** composite material **502** in cured state is later removed from mold **300** and releasable gap filler **402.** Composite material **502** in cured state is removed from mold **300** without any releasable gap filler **402** on composite material **502.**

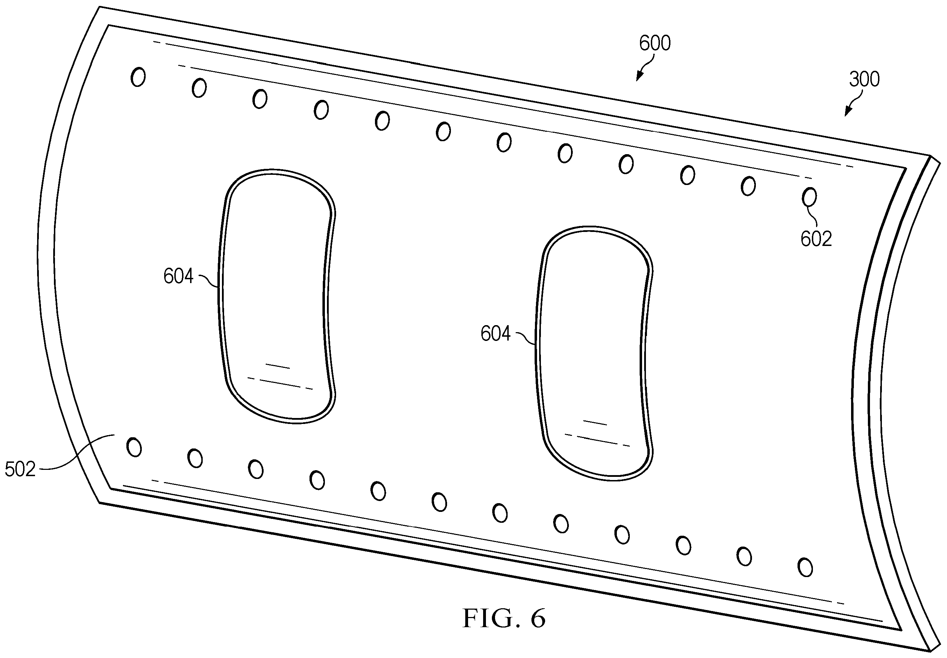

Turning now to **Figure 6****,** an illustration of an isometric view of a trimmed and drilled composite structure over the mold is depicted in accordance with an illustrative embodiment. In view **600,** composite material **502** is cured and has undergone drilling and trimming. In view **600,** composite material **502** has holes **602** drilled in composite material **502** and elements **604** trimmed in composite material **502.**

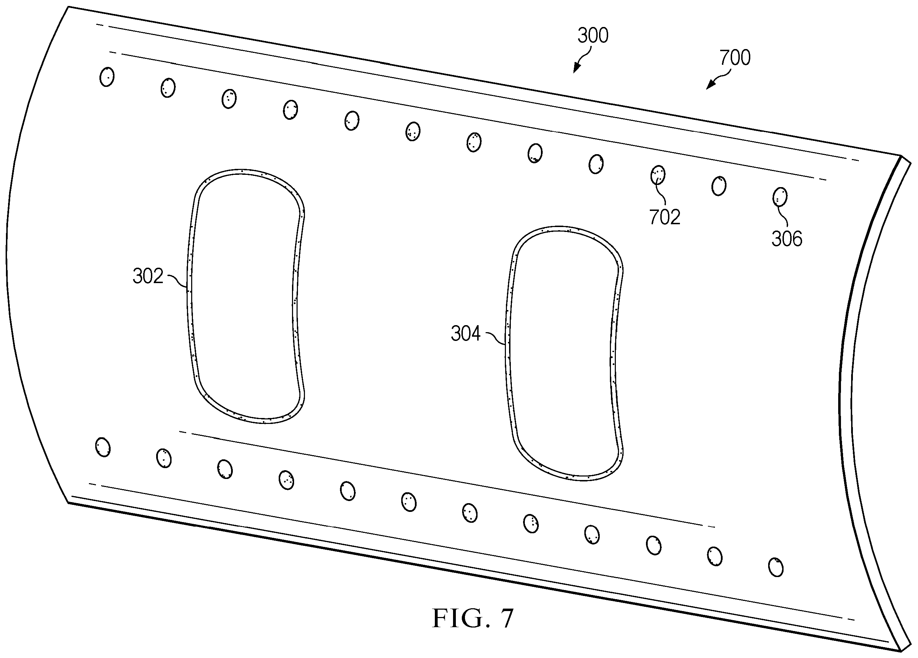

Turning now to **Figure 7****,** an illustration of an isometric view of a mold having releasable gap filler remaining in the recesses after composite material is removed is depicted in accordance with an illustrative embodiment. In view **700,** composite material **502** has been removed from mold **300.** Composite material **502** does not have any releasable gap filler **402** upon removal from mold **300.** Mold **300** contains all remaining releasable gap filler **402.** Releasable gap filler **402** remaining in recesses **302** is less than originally applied to mold **300.** Releasable gap filler **402** was impacted by trimming and drilling to remove some of releasable gap filler **402** resulting in remaining releasable gap filler **702.** Remaining releasable gap filler **702** is residual gap filler remaining in the recess.

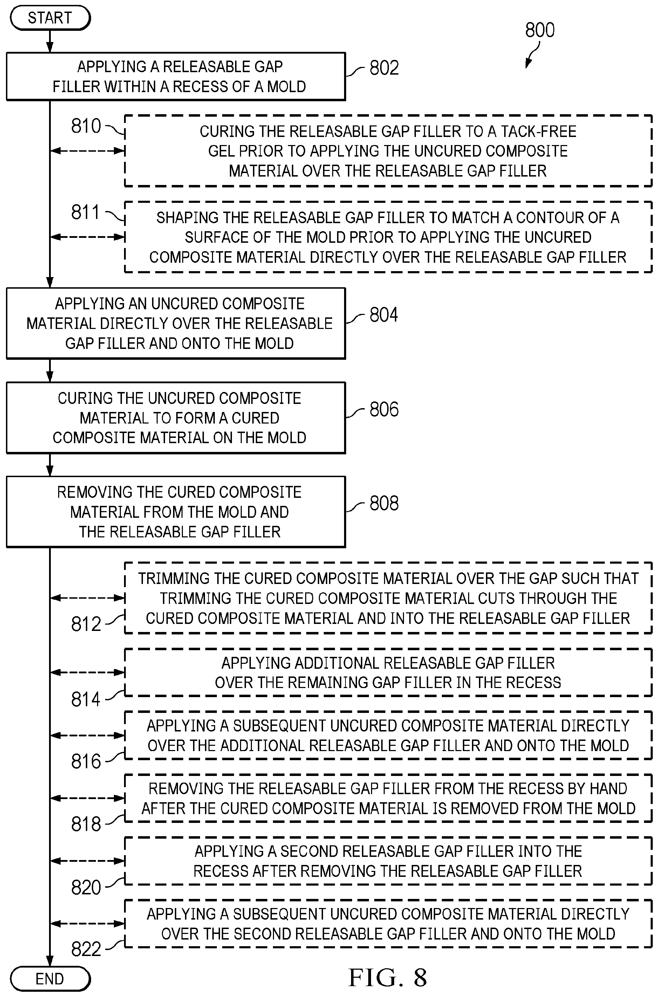

Turning now to **Figure 8****,** a flowchart of a method of forming a composite product is depicted in accordance with an illustrative embodiment. Method 800 can be used to form a portion of aircraft **100** of **Figure 1****.** Method **800** can be performed using mold **202** and releasable gap filler **218 of** **Figure 2****.** Method **800** can be performed using mold **300** and releasable gap filler **402 of** **Figures 3-7****.**

Method **800** applies a releasable gap filler within a recess of a mold (operation **802).** Method **800** applies an uncured composite material directly over the releasable gap filler and onto the mold (operation **804).** Method **800** cures the uncured composite material to form a cured composite material on the mold (operation **806).** Method **800** removes the cured composite material from the mold and the releasable gap filler (operation **808).** Afterwards, method **800** terminates.

In some illustrative examples, method **800** shapes the releasable gap filler to match a contour of a surface of the mold prior to applying the uncured composite material directly over the releasable gap filler. In some illustrative examples, method **800** cures the releasable gap filler to a tack-free gel prior to applying the uncured composite material over the releasable gap filler (operation **810).** In some illustrative examples, the releasable gap filler is shaped and inspected prior to applying the uncured composite material over the releasable gap filler. In some illustrative examples, method **800** shapes the releasable gap filler to match a contour of a surface of the mold prior to applying the uncured composite material directly over the releasable gap filler.

In some illustrative examples, method **800** trims the cured composite material over the recess such that trimming the cured composite material cuts through the cured composite material and into the releasable gap filler (operation **812).** In some illustrative examples, trimming comprises removing edges of the cured composite material. In some illustrative examples, trimming comprises removing portions of the uncured composite material according to a design for a composite structure.

In some illustrative examples, method **800** applies additional releasable gap filler over remaining releasable gap filler in the recess after trimming (operation **814).** The remaining releasable gap filler is gap filler that remains in the recess following the trimming that cuts into the releasable gap filler. By applying additional releasable gap filler over the remaining/residual releasable gap filler, removal steps can be reduced or eliminated to reduce manufacturing time.

In some illustrative examples, method **800** applies a subsequent uncured composite material directly over the additional releasable gap filler and onto the mold (operation **816).** In these illustrative examples, the time between removing the cured composite material from the mold and placing the subsequent uncured composite material onto the mold can be less than removing the remaining releasable gap filler and applying a replacement releasable gap filler into the recess.

In some illustrative examples, method **800** removes the releasable gap filler from the recess by hand after the cured composite material is removed from the mold (operation **818).** By removing the releasable gap filler by hand, the mold is not undesirably affected by removal tooling or removal methods. Further, having a releasable gap filler that is removable by hand can reduce the time spent on removing the gap filler.

In some illustrative examples, method **800** applies a second releasable gap filler into the recess after removing the releasable gap filler (operation **820).** In some illustrative examples, method **800** applies a subsequent uncured composite material directly over the second releasable gap filler and onto the mold (operation **822**).

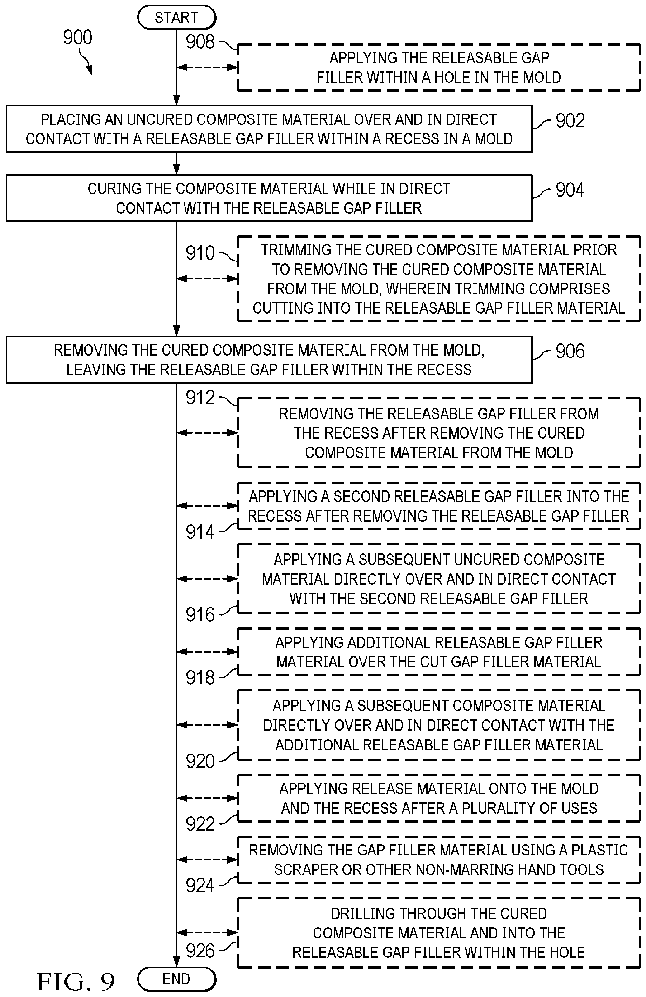

Turning now to **Figure 9****,** a flowchart of a method of forming a composite product is depicted in accordance with an illustrative embodiment. Method **900** can be used to form a portion of aircraft **100** of **Figure 1****.** Method **900** can be performed using mold **202** and releasable gap filler **218** of **Figure 2****.** Method **900** can be performed using mold **300** and releasable gap filler **402** of **Figures 3-7****.**

Method **900** places an uncured composite material over and in direct contact with a releasable gap filler within a recess in a mold (operation **902).** Method **900** cures the uncured composite material while in direct contact with the releasable gap filler to form a cured composite material (operation **904).** Method **900** removes the cured composite material from the mold, leaving the releasable gap filler within the recess (operation **906).** Afterwards, method **900** terminates.

In some illustrative examples, method **900** applies the releasable gap filler within a hole in the mold (operation **908).** In some illustrative examples, method **900** drills through the cured composite material and into the releasable gap filler within the hole (operation **926).**

In some illustrative examples, method **900** trims the cured composite material prior to removing the cured composite material from the mold, wherein trimming comprises cutting through the cured composite material and into the releasable gap filler to form cut gap filler (operation **910).** In some illustrative examples, trimming comprises removing edges of the cured composite material. In some illustrative examples, trimming comprises removing portions of the uncured composite material according to a design for a composite structure.

In some illustrative examples, method **900** removes the releasable gap filler from the recess after removing the cured composite material from the mold (operation **912).** In some illustrative examples, removing the releasable gap filler comprises removing the releasable gap filler using a plastic scraper or other non-marring hand tools (operation **924).**

In some illustrative examples, method **900** applies a second gap filler into the recess after removing the releasable gap filler (operation **914).** Second gap filler is a replacement releasable gap filler.

In some illustrative examples, method **900** applies a subsequent uncured composite material directly over and in direct contact with the second releasable gap filler (operation **916).** In some illustrative examples, the subsequent uncured composite material is to be cured and receive manufacturing processes to form the same design of part as formed from the uncured composite material.

In some illustrative examples, method **900** applies additional releasable gap filler over the cut gap filler (operation **918).** In these illustrative examples, additional releasable gap filler is applied to match the contour of the surface of the mold. In these illustrative examples, additional releasable gap filler is applied to refill the releasable gap filler machined from the recess. In some illustrative examples, method **900** applies a subsequent composite material directly over and in direct contact with the additional releasable gap filler (operation **920).**

In some illustrative examples, method **900** applies release material onto the mold and the recess after a plurality of uses (operation **922).** This release material is placed over the surface of the mold, to prevent adhesion of the uncured composite material to the surface of the mold. In some illustrative examples, the release material is applied when the releasable gap filler is not within the recess.

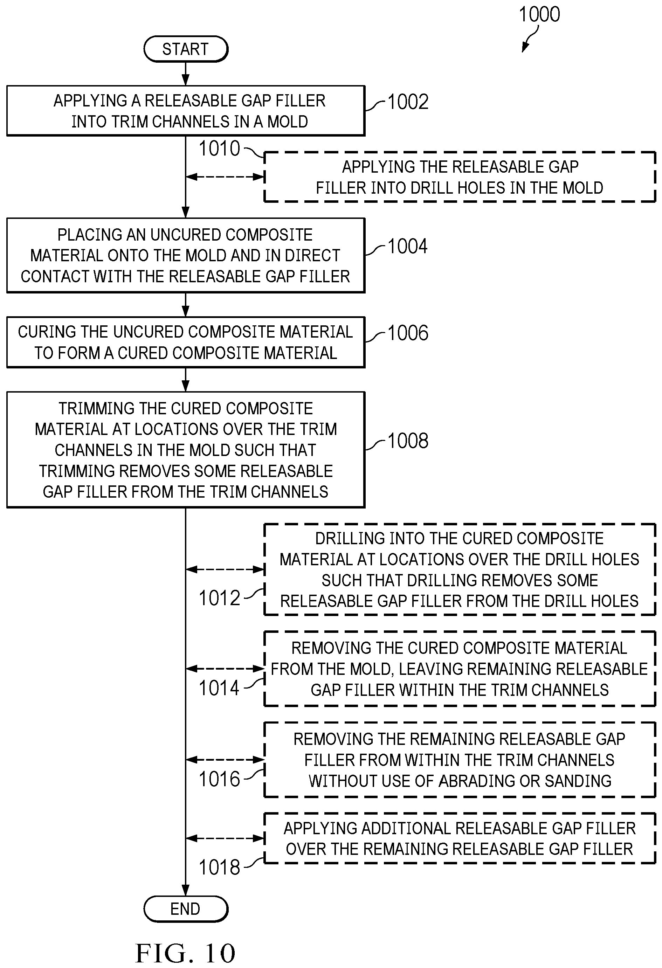

Turning now to **Figure 10****,** a flowchart of a method of forming a composite product is depicted in accordance with an illustrative embodiment. Method **1000** can be used to form a portion of aircraft **100** of **Figure 1****.** Method **1000** can be performed using mold **202** and releasable gap filler **218** of **Figure 2****.** Method **1000** can be performed using mold **300** and releasable gap filler **402** of **Figures 3-7****.**

Method **1000** applies a releasable gap filler into trim channels in a mold (operation **1002).** Method **1000** places an uncured composite material onto the mold and in direct contact with the releasable gap filler (operation **1004).** Method cures the uncured composite material to form a cured composite material (operation **1006).** Method **1000** trims the cured composite material at locations over the trim channels in the mold such that trimming removes some releasable gap filler from the trim channels (operation **1008).** Afterwards, method **1000** terminates.

In some illustrative examples, method **1000** applies the releasable gap filler into drill holes in the mold (operation **1010).** In some illustrative examples, method **1000** drills into the cured composite material at locations over the drill holes such that drilling removes some releasable gap filler from the drill holes (operation **1012).**

In some illustrative examples, method **1000** removes the cured composite material from the mold, leaving remaining releasable gap filler within the trim channels (operation **1014).** In some illustrative examples, method **1000** removes the remaining releasable gap filler from within the trim channels without use of abrading or sanding (operation **1016).** In some illustrative examples, method **1000** applies additional releasable gap filler over the remaining releasable gap filler (operation **1018).**

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

The flowcharts and block diagrams in the different depicted embodiments illustrate the architecture, functionality, and operation of some possible implementations of apparatuses and methods in an illustrative embodiment. In this regard, each block in the flowcharts or block diagrams may represent at least one of a module, a segment, a function, or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **810** through operation **822** may be optional. For example, operation **908** through operation **926** may be optional. For example, operation **1010** through operation **1018** may be optional.

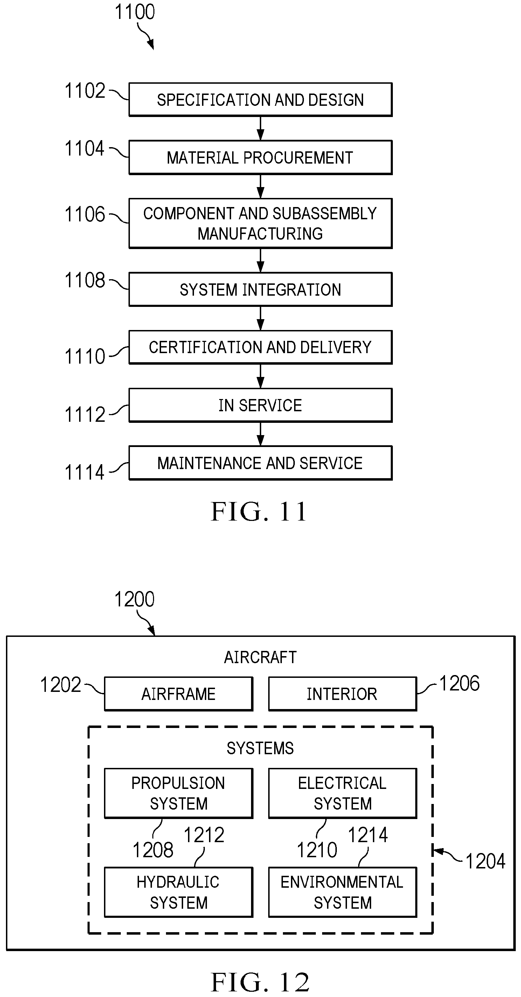

Illustrative embodiments of the present disclosure may be described in the context of aircraft manufacturing and service method **1100** as shown in **Figure 11** and aircraft **1200** as shown in **Figure 12****.** Turning first to **Figure 11****,** an illustration of an aircraft manufacturing and service method in a form of a block diagram is depicted in accordance with an illustrative embodiment. During pre-production, aircraft manufacturing and service method **1100** may include specification and design **1102** of aircraft **1200** in **Figure 12** and material procurement **1104.**

During production, component and subassembly manufacturing **1106** and system integration **1108** of aircraft **1200** takes place. Thereafter, aircraft **1200** may go through certification and delivery **1110** in order to be placed in service **1112.** While in service **1112** by a customer, aircraft **1200** is scheduled for routine maintenance and service **1114,** which may include modification, reconfiguration, refurbishment, or other maintenance and service.

Each of the processes of aircraft manufacturing and service method **1100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 12****,** an illustration of an aircraft in a form of a block diagram is depicted in which an illustrative embodiment may be implemented. In this example, aircraft **1200** is produced by aircraft manufacturing and service method **1100** of **Figure 11** and may include airframe **1202** with plurality of systems **1204** and interior **1206.** Examples of systems **1204** include one or more of propulsion system **1208,** electrical system **1210,** hydraulic system **1212,** and environmental system **1214.** Any number of other systems may be included.

Apparatuses and methods embodied herein may be employed during at least one of the stages of aircraft manufacturing and service method **1100.** One or more illustrative embodiments may be manufactured or used during at least one of component and subassembly manufacturing **1106,** system integration **1108,** in service **1112,** or maintenance and service **1114** of **Figure 11****.**

A portion of airframe **1202** of aircraft **1200** can be formed by one of method **800,** method **900,** or method **1000.** At least one of method **800,** method **900,** or method **1000** can be performed during component and subassembly manufacturing **1106.** A composite structure formed using one of method **800,** method **900,** or method **1000** can be present and utilized during in service **1112.** At least one of method **800,** method **900,** or method **1000** can be performed during maintenance and service **1114** to form a replacement part.

The illustrative examples present methods of forming a composite structure that result in flow reduction. The illustrative examples present methods of forming a composite structure that result in elimination of additional processing steps. The illustrative examples present methods of forming a composite structure that reduces the use of hazardous chemicals. The illustrative examples present methods of forming a composite structure that saves manufacturing time.

The illustrative examples use releasable gap filler material that does not require an additional release layer. The releasable gap filler also can be removed in an easier fashion than conventional materials.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A method (800) of forming a composite product:
applying (802) a releasable gap filler (218, 402) within a recess (206) of a mold (202), wherein, after the releasable gap filler (218, 402) is cured, no additional release layers are added over releasable gap filler (218, 402) ;
applying (804) an uncured (220) composite material (204) directly over the releasable gap filler (218, 402) and onto the mold (202);
curing (806) the uncured (220) composite material (204) to form a cured (224) composite material (204) on the mold (202); and
removing (808) the cured (224) composite material (204) from the mold (202) and the releasable gap filler (218, 402).

2. The method (800) of claim 1, further comprising:
trimming (812) the cured (224) composite material (204) over the recess (206) such that trimming the cured (224) composite material (204) cuts through the cured (224) composite material (204) and into the releasable gap filler (218, 402).

3. The method (800) of claim 2, further comprising:
applying (814) additional releasable gap filler (230) over remaining releasable gap filler (702) in the recess (206) after trimming; and
applying (816) a subsequent uncured (220) composite material (204) directly over the additional releasable gap filler (230) and onto the mold (202).

4. The method (800) of any of claims 1 to 3, further comprising:
removing (818) the releasable gap filler (218, 402) from the recess (206) by hand after the cured (224) composite material (204) is removed from the mold (202).

5. The method (800) of claim 4, further comprising:
applying (820) a second releasable gap filler (228) into the recess (206) after removing the releasable gap filler (218, 402); and
applying (822) a subsequent uncured (220) composite material (204) directly over the second releasable gap filler (228) and onto the mold (202).

6. The method (800) of any of claims 1 to 5, further comprising:
shaping (811) the releasable gap filler (218, 402) to match a contour (214) of a surface (212) of the mold (202) prior to applying the uncured (220) composite material (204) directly over the releasable gap filler (218, 402).

7. A method (900) of forming a composite product:
placing (902) an uncured (220) composite material (204) over and in direct contact with a releasable gap filler (218, 402) within a recess (206) in a mold (202), wherein, after the releasable gap filler (218, 402) is cured, no additional release layers are added over releasable gap filler (218, 402);
curing (904) the uncured (220) composite material (204) while in direct contact with the releasable gap filler (218, 402) to form a cured (224) composite material (204); and
removing (906) the cured (224) composite material (204) from the mold (202), leaving the releasable gap filler (218, 402) within the recess (206).

8. The method (900) of claim 7, further comprising:
removing (912) the releasable gap filler (218, 402) from the recess (206) after removing the cured (224) composite material (204) from the mold (202).

9. The method (900) of claim 8, further comprising:
applying (914) a second releasable gap filler (228) into the recess (206) after removing the releasable gap filler (218, 402); and
applying (916) a subsequent uncured (220) composite material (226) directly over and in direct contact with the second releasable gap filler (228).

10. The method (900) of any of claims 7 to 9, further comprising:
trimming (910) the cured (224) composite material (204) prior to removing the cured (224) composite material (204) from the mold (202), wherein trimming comprises cutting through the cured (224) composite material (204) and into the releasable gap filler (218, 402) to form cut gap filler.

11. The method (900) of claim 10, further comprising:
applying (918) additional releasable gap filler (230) over the cut gap filler; and
applying (920) a subsequent composite material (226) directly over and in direct contact with the additional releasable gap filler (230).

12. The method (900) of any of claims 7 to 11, further comprising:
applying (922) release material (216) onto the mold (202) and the recess (206) after a plurality of uses.

13. The method (900) of any of claims 7 to 12, wherein removing the releasable gap filler (218, 402) comprises removing (924) the releasable gap filler (218, 402) using a plastic scraper or other non-marring hand tools.

14. The method (900) of any of claims 8 to 13, further comprising:
applying (908) the releasable gap filler (218, 402) within a hole (210, 306) in the mold (202); and
drilling (926) through the cured (224) composite material (204) and into the releasable gap filler (218, 402) within the hole (210, 306).

## Patentansprüche

1. Verfahren (800) zum Bilden eines Verbundwerkstoffprodukts, aufweisend:
Aufbringen (802) eines lösbaren Spaltfüllers (218, 402) innerhalb einer Vertiefung (206) einer Form (202), wobei, nachdem der lösbare Spaltfüller (218, 402) ausgehärtet ist, keine zusätzlichen Trennschichten über den lösbaren Spaltfüller (218, 402) hinzugefügt werden;
Aufbringen (804) eines nicht ausgehärteten (220) Verbundwerkstoffmaterials (204) direkt über den lösbaren Spaltfüller (218, 402) und auf die Form (202);
Aushärten (806) des nicht ausgehärteten (220) Verbundwerkstoffmaterials (204), um ein ausgehärtetes (224) Verbundwerkstoffmaterial (204) auf der Form (202) zu bilden; und
Entfernen (808) des ausgehärteten (224) Verbundwerkstoffmaterials (204) von der Form (202) und dem lösbaren Spaltfüller (218, 402).

2. Verfahren (800) nach Anspruch 1, des Weiteren aufweisend:
Beschneiden (812) des ausgehärteten (224) Verbundwerkstoffmaterials (204) über der Vertiefung (206), wobei das Beschneiden des ausgehärteten (224) Verbundwerkstoffmaterials (204) durch das ausgehärtete (224) Verbundwerkstoffmaterial (204) hindurch und in den lösbaren Spaltfüller (218, 402) hinein schneidet.

3. Verfahren (800) nach Anspruch 2, des Weiteren aufweisend:
Aufbringen (814) eines zusätzlichen lösbaren Spaltfüllers (230) über einem verbleibenden lösbaren Spaltfüller (702) in der Vertiefung (206) nach dem Beschneiden; und
Aufbringen (816) eines nachfolgenden nicht ausgehärteten (220) Verbundwerkstoffmaterials (204) direkt über den zusätzlichen lösbaren Spaltfüller (230) und auf die Form (202).

4. Verfahren (800) nach einem der Ansprüche 1 bis 3, des Weiteren aufweisend:
Entfernen (818) des lösbaren Spaltfüllers (218, 402) aus der Vertiefung (206) von Hand, nachdem das ausgehärtete (224) Verbundwerkstoffmaterial (204) von der Form (202) entfernt ist.

5. Verfahren (800) nach Anspruch 4, des Weiteren aufweisend:
Aufbringen (820) eines zweiten lösbaren Spaltfüllers (228) in die Vertiefung (206) nach dem Entfernen des lösbaren Spaltfüllers (218, 402); und
Aufbringen (822) eines nachfolgenden nicht ausgehärteten (220) Verbundwerkstoffmaterials (204) direkt über den zweiten lösbaren Spaltfüller (228) und auf die Form (202).

6. Verfahren (800) nach einem der Ansprüche 1 bis 5, des Weiteren aufweisend:
Formen (811) des lösbaren Spaltfüllers (218, 402), um einer Kontur (214) einer Oberfläche (212) der Form (202) zu entsprechen, vor dem Aufbringen des nicht ausgehärteten (220) Verbundwerkstoffmaterials (204) direkt über den lösbaren Spaltfüller (218, 402).

7. Verfahren (900) zum Bilden eines Verbundwerkstoffprodukts, aufweisend:
Platzieren (902) eines nicht ausgehärteten (220) Verbundwerkstoffmaterials (204) über und in direktem Kontakt mit einem lösbaren Spaltfüller (218, 402) innerhalb einer Vertiefung (206) in einer Form (202), wobei, nachdem der lösbare Spaltfüller (218, 402) ausgehärtet ist, keine zusätzlichen Trennschichten über den lösbaren Spaltfüller (218, 402) hinzugefügt werden;
Aushärten (904) des nicht ausgehärteten (220) Verbundwerkstoffmaterials (204), während es in direktem Kontakt mit dem lösbaren Spaltfüller (218, 402) ist, um ein ausgehärtetes (224) Verbundwerkstoffmaterial (204) zu bilden; und
Entfernen (906) des ausgehärteten (224) Verbundwerkstoffmaterials (204) von der Form (202), wobei der lösbare Spaltfüller (218, 402) innerhalb der Vertiefung (206) verbleibt.

8. Verfahren (900) nach Anspruch 7, des Weiteren aufweisend:
Entfernen (912) des lösbaren Spaltfüllers (218, 402) aus der Vertiefung (206), nachdem das ausgehärtete (224) Verbundwerkstoffmaterial (204) von der Form (202) entfernt ist.

9. Verfahren (900) nach Anspruch 8, des Weiteren aufweisend:
Aufbringen (914) eines zweiten lösbaren Spaltfüllers (228) in die Vertiefung (206) nach dem Entfernen des lösbaren Spaltfüllers (218, 402); und
Aufbringen (916) eines nachfolgenden nicht ausgehärteten (220) Verbundwerkstoffmaterials (226) direkt über und in direktem Kontakt mit dem zweiten lösbaren Spaltfüller (228).

10. Verfahren (900) nach einem der Ansprüche 7 bis 9, des Weiteren aufweisend:
Beschneiden (910) des ausgehärteten (224) Verbundwerkstoffmaterials (204) vor dem Entfernen des ausgehärteten (224) Verbundwerkstoffmaterials (204) von der Form (202), wobei das Beschneiden umfasst, durch das ausgehärtete (224) Verbundwerkstoffmaterial (204) und in den lösbaren Spaltfüller (218, 402) hineinzuschneiden, um geschnittenen Spaltfüller zu bilden.

11. Verfahren (900) nach Anspruch 10, des Weiteren aufweisend:
Aufbringen (918) eines zusätzlichen lösbaren Spaltfüllers (230) über den geschnittenen Spaltfüller; und
Aufbringen (920) eines nachfolgenden Verbundwerkstoffmaterials (226) direkt über und in direktem Kontakt mit dem zusätzlichen lösbaren Spaltfüller (230).

12. Verfahren (900) nach einem der Ansprüche 7 bis 11, des Weiteren aufweisend:
Aufbringen (922) von Trennmaterial (216) auf die Form (202) und die Vertiefung (206) nach einer Vielzahl von Verwendungen.

13. Verfahren (900) nach einem der Ansprüche 7 bis 12, wobei das Entfernen des lösbaren Spaltfüllers (218, 402) umfasst, den lösbaren Spaltfüller (218, 402) unter Verwendung eines Kunststoffschabers oder anderer nicht beschädigender Handwerkzeuge zu entfernen (924).

14. Verfahren (900) nach einem der Ansprüche 8 bis 13, des Weiteren aufweisend:
Aufbringen (908) des lösbaren Spaltfüllers (218, 402) innerhalb eines Lochs (210, 306) in der Form (202); und
Bohren (926) durch das ausgehärtete (224) Verbundwerkstoffmaterial (204) und in den lösbaren Spaltfüller (218, 402) innerhalb des Lochs (210, 306).

## Revendications

1. Procédé (800) de formation d'un produit composite :
appliquant (802) un élément de remplissage d'espace amovible (218, 402) dans un renfoncement (206) d'un moule (202), dans lequel, après le durcissement de l'élément de remplissage d'espace amovible (218, 402), aucune couche de démoulage supplémentaire n'est ajoutée sur l'élément de remplissage d'espace amovible (218, 402) ;
appliquant (804) un matériau composite (204) non durci (220) directement sur l'élément de remplissage d'espace amovible (218, 402) et sur le moule (202) ;
durcissant (806) le matériau composite (204) non durci (220) pour former un matériau composite (204) durci (224) sur le moule (202) ; et
retirant (808) le matériau composite (204) durci (224) du moule (202) et de l'élément de remplissage d'espace amovible (218, 402).

2. Procédé (800) selon la revendication 1, comprenant en outre :
le rognage (812) du matériau composite (204) durci (224) sur le renfoncement (206) de telle sorte que le rognage du matériau composite (204) durci (224) découpe à travers le matériau composite (204) durci (224) et dans l'élément de remplissage d'espace amovible (218, 402).

3. Procédé (800) selon la revendication 2, comprenant en outre :
l'application (814) d'un élément de remplissage d'espace amovible supplémentaire (230) sur l'élément de remplissage d'espace amovible restant (702) dans le renfoncement (206) après le rognage ; et
l'application (816) d'un matériau composite (204) ultérieur non durci (220) directement sur l'élément de remplissage d'espace supplémentaire (230) et sur le moule (202).

4. Procédé (800) selon l'une quelconque des revendications 1 à 3, comprenant en outre :
le retrait (818) de l'élément de remplissage d'espace amovible (218, 402) du renfoncement (206) à la main après le retrait du matériau composite (204) durci (224) du moule (202).

5. Procédé (800) selon la revendication 4, comprenant en outre :
l'application (820) d'un second élément de remplissage d'espace amovible (228) dans le renfoncement (206) après le retrait de l'élément de remplissage d'espace amovible (218, 402) ; et
l'application (822) d'un matériau composite (204) ultérieur non durci (220) directement sur le second élément de remplissage d'espace amovible (228) et sur le moule (202).

6. Procédé (800) selon l'une quelconque des revendications 1 à 5, comprenant en outre :
le façonnage (811) de l'élément de remplissage d'espace amovible (218, 402) pour qu'il corresponde à un contour (214) d'une surface (212) du moule (202) avant d'appliquer le matériau composite (204) non durci (220) directement sur l'élément de remplissage d'espace amovible (218, 402).

7. Procédé (900) de formation d'un produit composite :
le placement (902) d'un matériau composite (204) non durci (220) sur un élément de remplissage d'espace amovible (218, 402) et en contact direct avec celui-ci à l'intérieur d'un renfoncement (206) dans un moule (202), dans lequel, après le durcissement de l'élément de remplissage d'espace amovible (218, 402), aucune couche de démoulage supplémentaire n'est ajoutée sur l'élément de remplissage d'espace amovible (218, 402) ;
le durcissement (904) du matériau composite (204) non durci (220) alors qu'il est en contact direct avec l'élément de remplissage d'espace amovible (218, 402) pour former un matériau composite (204) durci (224) ; et
le retrait (906) du matériau composite (204) durci (224) du moule (202), en laissant l'élément de remplissage d'espace amovible (218, 402) à l'intérieur du renfoncement (206).

8. Procédé (900) selon la revendication 7, comprenant en outre :
le retrait (912) de l'élément de remplissage d'espace amovible (218, 402) du renfoncement (206) après le retrait du matériau composite (204) durci (224) du moule (202).

9. Procédé (900) selon la revendication 8, comprenant en outre :
l'application (914) d'un second élément de remplissage d'espace amovible (228) dans le renfoncement (206) après le retrait de l'élément de remplissage d'espace amovible (218, 402) ; et
l'application (916) d'un matériau composite ultérieur (226) non durci (220) directement sur le second élément de remplissage d'espace amovible (228) et en contact direct avec celui-ci.

10. Procédé (900) selon l'une quelconque des revendications 7 à 9, comprenant en outre :
le rognage (910) du matériau composite (204) durci (224) avant le retrait du matériau composite (204) durci (224) du moule (202), dans lequel le rognage comprend le découpage à travers le matériau composite (204) durci (224) et dans l'élément de remplissage d'espace amovible (218, 402) pour former un élément de remplissage d'espace découpé.

11. Procédé (900) selon la revendication 10, comprenant en outre :
l'application (918) d'un élément de remplissage d'espace amovible (230) supplémentaire sur l'élément de remplissage d'espace découpé ; et
l'application (920) d'un matériau composite ultérieur (226) directement sur l'élément de remplissage d'espace amovible supplémentaire (230) et en contact direct avec celui-ci.

12. Procédé (900) selon l'une quelconque des revendications 7 à 11, comprenant en outre :
l'application (922) d'un matériau de démoulage (216) sur le moule (202) et le renfoncement (206) après une pluralité d'utilisations.

13. Procédé (900) selon l'une quelconque des revendications 7 à 12, dans lequel le retrait de l'élément de remplissage d'espace amovible (218, 402) comprend le retrait (924) de l'élément de remplissage d'espace amovible (218, 402) à l'aide d'un grattoir en plastique ou d'autres outils manuels anti-rayure.

14. Procédé (900) selon l'une quelconque des revendications 8 à 13, comprenant en outre :
l'application (908) de l'élément de remplissage d'espace amovible (218, 402) à l'intérieur d'un trou (210, 306) dans le moule (202) ; et
le forage (926) à travers le matériau composite (204) durci (224) et dans l'élément de remplissage d'espace amovible (218, 402) à l'intérieur du trou (210, 306).
